(19) **Europäisches Patentamt**

**European Patent Office**

**Office européen des brevets**

(11) Veröffentlichungsnummer: **0 392 294**

**A1**

(12) # EUROPÄISCHE PATENTANMELDUNG

(21) Anmeldenummer: **90106193.7**

(51) Int. Cl.⁵: **G01F 1/66**

(22) Anmeldetag: **30.03.90**

(30) Priorität: **13.04.89 EP 89106613**

(43) Veröffentlichungstag der Anmeldung:
**17.10.90 Patentblatt 90/42**

(84) Benannte Vertragsstaaten:
**AT BE CH DE DK FR GB IT LI NL SE**

(71) Anmelder: **Siemens Aktiengesellschaft**
**Wittelsbacherplatz 2**
**D-8000 München 2(DE)**

(72) Erfinder: **Greppmaier, Paul**
**Salzburger Strasse 18**
**D-8500 Nürnberg 50(DE)**
Erfinder: **Tschirner, Peter, Dipl.-Ing.**
**Kahläckerstrasse 5**
**D-8500 Nürnberg 50(DE)**

(54) **Durchflussmesseinrichtung für flüssige Medien nach dem Ultraschall-Laufzeitprizip.**

(57) Durchflußmeßeinrichtung für flüssige Medien nach dem Ultraschall- Laufzeitprinzip, bei der ein von einem Mantelrohr (1) umschlossenes Meßrohr (9) Ultraschallreflektoren sowie Öffnungen für den Ein- und Austritt eines Ultraschallstrahlenbündels besitzt. Das Ultraschallstrahlenbündel wird von in Richtung ihrer Symmetrieachse strahlenden bzw. empfangenden Ultraschallwandlern (18, 19) erzeugt, die im Mantelrohr (1) flüssigkeitsdicht metallgekapselt angeordnet sind. Die senkrecht zur Durchflußrichtung des Mediums in das Meßrohr (9) ein- bzw. austretenden Ultraschallstrahlen werden durch erste Reflektoren (26, 27) unter einem Winkel von 22,5° ihrer Reflexionsflächen gegen die Strömungsrichtung des Mediums gegen die weiteren Reflektoren (28, 29, 30) gelenkt, deren Reflexionsflächen parallel zur Strömungsrichtung des Mediums angeordnet sind.

FIG 1

EP 0 392 294 A1

## Durchflußmeßeinrichtung für flüssige Medien nach dem Ultraschall-Laufzeitprinzip

Die Erfindung betrifft eine Durchflußmeßeinrichtung für flüssige Medien nach dem Ultraschall-Laufzeitprinzip mit einem Mantelrohr, welches ein vom zu messenden Medium durchströmtes Meßrohr umschließt, nach dem Oberbegriff des Patentanspruchs 1.

Eine solche Durchflußmeßeinrichtung ist aus der DE-PS 35 44 456 bekannt.

Bei dieser Durchflußmeßeinrichtung sind Ultraschallwandler mit schräg zu ihrer Symmetrieachse ein- bzw. austretendem Ultraschallstrahlenbündel, sogenannte Interdigitalwandler, benutzt. Diese Interdigitalwandler sind gegenüber ebenfalls bekannten, senkrecht zu ihrer Oberfläche abstrahlenden bzw. empfangenden Ultraschallwandlern verhältnismäßig aufwendige Bauelemente, deren Kapselung gegen eindringende Feuchtigkeit außerdem nicht aus Metall bestehen darf. Eine solche Metallkapselung würde eine zu große Dämpfung der unter einem Winkel von 45° austretenden Ultraschallstrahlen hervorrufen. Diese Wandler können daher nur mit einer Kunststoffkapselung ausgerüstet werden, die gegenüber insbesondere aggressiven Flüssigkeiten keine hohe Standfestigkeit besitzt. Dadurch kommt es nach relativ kurzer Zeit zu Undichtigkeiten und damit zum Ausfall des betreffenden Ultraschallwandlers.

Die Verwendung von Ultraschallwandlern mit parallel zu ihrer Symmetrieachse ein- bzw. austretendem Ultraschallstrahlenbündel ist an sich aus der EP-A-0 303 255 bekannt. Die dort offenbarte Meßeinrichtung ist so aufgebaut, daß das jeweils gesendete Ultraschallstrahlenbündel nach einem ersten Durchtritt durch das Medium auf eine Reflektorfläche trifft, die gegenüber der Flußrichtung des Mediums derart abgewinkelt ist, daß sie das Ultraschallstrahlenbündel in Richtung auf den empfangenden Ultraschallwandler unter einem solchen Winkel reflektiert, daß dieser nach einem zweiten Durchtritt durch das Medium eine weitere Reflexion an der gegenüberliegenden Innenwand der Meßeinrichtung symmetrisch zwischen den Ultraschallwandlern erfährt, dabei nach einem dritten Durchtritt durch das Medium auf eine zweite reziprok zu der ersten abgewinkelte Reflexionsfläche auftrifft und nach einem vierten Durchtritt durch das Medium an die Oberfläche des empfangenden Ultraschallwandlers gelangt.

Diese Meßeinrichtung zeichnet sich dadurch aus, daß sie einen sehr einfachen Aufbau besitzt, und die verwendeten Ultraschallwandler wesentlich preiswerter sind als die Interdigitalwandler. Allerdings eignet sich diese Meßeinrichtung nur für eine bestimmte Anwendungsart, nämlich derjenigen mit zweiseitigem Rohranschluß im Durchflußverfahren.

Bei einem sogenannten Einrohranschluß, bei dem der Flüssigkeitseintritt und der Flüssigkeitsaustritt auf der gleichen Seite erfolgen, ist diese Meßeinrichtung nicht anwendbar.

Der Erfindung liegt die Aufgabe zugrunde, eine universell verwendbare Durchflußmeßeinrichtung zu schaffen, die mit parallel zu ihrer Symmetrieachse ein- bzw. austretendem Ultraschallstrahlenbündel arbeitenden Ultraschallwandlern ausgestattet werden kann und die sowohl eine Messung für Anschlußarmaturen erlaubt, bei denen Flüssigkeitseintritt und Flüssigkeitsaustritt an gegenüberliegenden Seiten erfolgt, wie bei solchen Armaturen, bei denen die Flüssigkeit an der gleichen Seite einund ausströmt.

Diese Aufgabe wird durch die im Patentanspruch 1 angegebene Erfindung gelöst. Dadurch ist erreicht, daß eine universell anwendbare und herstellungstechnisch günstige Durchflußmeßeinrichtung nach dem Ultraschall-Laufzeitprinzip mit Ultraschallwandlern ausgerüstet werden kann, die wegen ihres parallel zu ihrer Symmetrieachse ein- bzw. austretenden Ultraschallstrahlenbündels die bereits beschriebenen Vorteile besitzen.

In einer Weiterbildung der Erfindung gemäß Patentanspruch 2 ist durch die geringe Neigung der Reflexionsflächen erreicht, daß die Wirbelbildung in Flußrichtung hinter den Reflexionsflächen gering bleibt, so daß sich keine ausgeprägten Schmutzecken bilden können. Außerdem bewirkt die doppelte Reflexion des Ultraschallstrahles eine längere Durchtrittsstrecke durch das Medium, was zu einer Erhöhung der Meßgenauigkeit führt.

Die Ausbildung des Meßrohres nach Patentanspruch 3 hat den Vorteil, daß wegen der unterschiedlichen Ultraschallgeschwindigkeiten zwischen den metallischen Reflexionsflächen und dem Kunststoffmaterial der Rohrwandung, in der diese eingebettet sind, die störende Streustrahlenbildung durch Beugung von Ultraschallstrahlen weitgehend vermieden ist.

Weitere Einzelheiten der Erfindung ergeben sich aus den nachfolgenden Ausführungsbeispielen. Darin zeigen:

Fig. 1 eine Durchflußmeßeinrichtung mit Flüssigkeitsein- und -austritt an unterschiedlichen Seiten des Mantelrohres und

Fig. 2 einen sogenannten Einrohranschluß, bei dem Flüssigkeitsein- und -austritt an der gleichen Seite erfolgen.

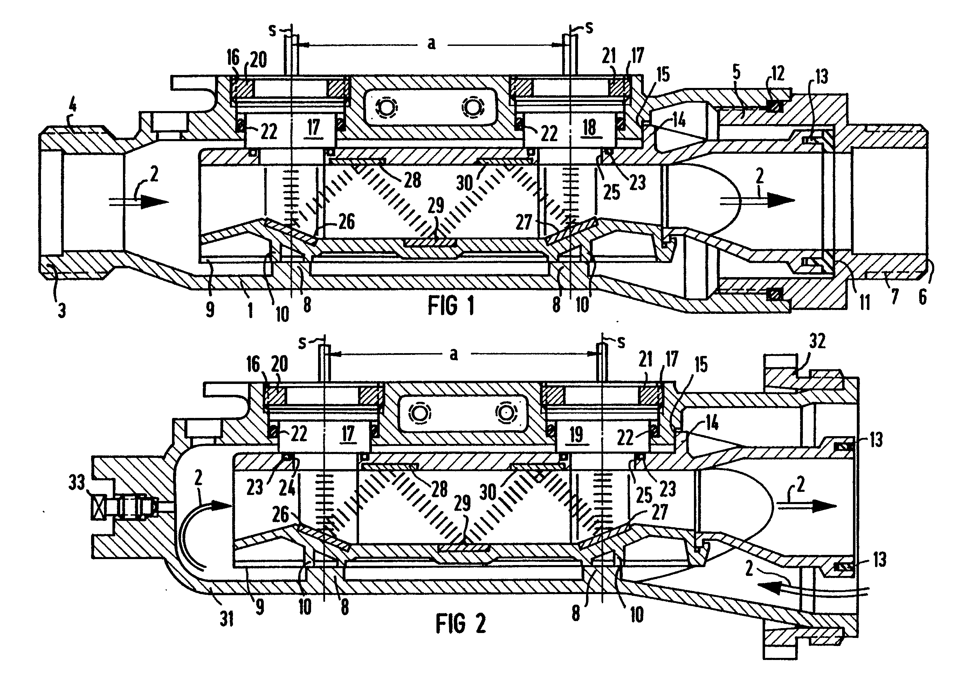

Gemäß Fig. 1 besteht die Durchflußmeßeinrichtung aus einem Mantelrohr 1, welches auf der Einströmseite des in Form von Pfeilen 2 schematisch dargestellten flüssigen Mediums mit einem Anschlußstutzten 3 versehen ist, auf dessen Außengewinde die nicht dargestellte Überwurfmutter eines Durchflußrohres flüssigkeitsdicht aufschraubbar ist. Die Ausströmseite des Mantelrohres 1 ist mit einem Innengewinde versehen, in welches ein Reduzierstück 5 eingeschraubt ist, das mit einem Anschlußstutzen 6 versehen ist, dessen Außengewinde 7 dem Außengewinde 4 des Anschlußstutzens 3 gleich ist und auf das eine Überwurfmutter des nicht dargestellten Durchflußrohres flüssigkeitsdicht aufschraubbar ist, in das das Medium 2 einfließt.

Das Innere des metallischen Mantelrohres 1 ist so ausgebildet, daß es ein Meßrohr 9 aus Kunststoff aufnehmen kann. Dieses wird in das Mantelrohr eingeführt und ist mit Stützringen 10 versehen, die auf korrespondierenden Halterungsrippen 8 des Mantelrohres aufliegen. Das Meßrohr 9 liegt ausströmseitig mit seiner ·Stirnfläche an einem ringförmigen Ansatz 11 des Reduzierstückes 5 an. Beide sind so bemessen, daß eine Anschlagnase 14 des Meßrohres 9 im eingeschraubten Zustand des Reduzierstückes 5 an einer Bezugsfläche 15 des Mantelrohres 1 anliegt. Das Meßrohr 9 ist mittels einer O-Ring-Dichtung 12 und einem Dichtring 13 sowohl gegen das Mantelrohr wie gegen das Meßrohr 9 abgedichtet. Die Wand des Mantelrohres 1 ist mit Bohrungen 16, 17 für die Aufnahme der Ultraschallwandler 18, 19 versehen, deren Symmetrieachsen in einem Abstand a parallel zur Fließrichtung des Mediums angeordnet sind. Die Ultraschallwandler 18, 19 sind durch Gewinderinge 20, 21 in den Bohrungen 16, 17 befestigt und gegen diese durch O-Ring-Dichtungen 22, 23 abgedichtet. Der Außendurchmesser des Meßrohres 9 ist geringfügig kleiner als der Innendurchmesser des Mantelrohres 1. Der dadurch vorhandene Zwischenraum zwischen den beiden Rohren steht mit dem flüssigen Medium in Verbindung, so daß die Wandung des Meßrohres praktisch druckfrei ist. Das Meßrohr 9 ist mit zwei zu den Bohrungen 16, 17 des Mantelrohres koaxialen Öffnungen 24, 25 für den Durchtritt der von den Ultraschallwandlern 18, 19 in Richtung ihrer Symmetrieachse s erzeugten Ultraschallstrahlenbündel in das Innere des Meßrohres versehen. Diesen Öffnungen 25, 26 gegenüber liegen metallische Reflektoren 26, 27, deren Reflexionsflächen in einem Winkel von 22,5° gegen die Flußrichtung einander zugewandt geneigt sind und deren Größe so bemessen ist, daß das auftreffende Ultraschallstrahlenbündel durch mehrfache Reflexionen an gegenüberliegend, in von den Reflexionswinkeln bestimmten Abständen angeordneten, in die Innenwand des Meßrohres bündig und mit ihren Reflexionsflächen parallel zur Fließrichtung des Mediums eingelassenen Reflektoren 28, 29, 30 vom jeweils sendenden, an den empfangenden Ultraschallwandler gelangt.

Es sei angenommen, daß der Ultraschallwandler 18 auf Sendung und der Ultraschallwandler 19 auf Empfang geschaltet ist. Die dazu notwendige Elektronik ist bekannt und bedarf daher keiner näheren Erläuterung. Vom sendenden Ultraschallwandler 18 gelangt das Ultraschallstrahlenbündel zunächst an den geneigten Reflektor 26, von diesem an den gegenüberliegenden, flußrichtungsparallelen Reflektor 28, der das Ultraschallstrahlenbündel auf den symmetrisch zwischen beiden Ultraschallwandlern angeordneten fließrichtungsparallelen Reflektor 29 lenkt, von dem es durch erneute Reflexion an den fließrichtungsparallelen, gegenüberliegenden Reflektor 30 gelangt, der es auf den zweiten geneigten Reflektor 27 umlenkt, der es dann schließlich dem empfangenden Ultraschallwandler 19 senkrecht zur Flußrichtung zuführt.

Da das Meßrohr 9 aus Kunststoff besteht, erleidet der durch die metallischen Reflektoren hindurchtretende Anteil des Ultraschallstrahles eine so starke Beugung, daß er nicht mehr zeitverzögert in den Meßstrahl gelangen und dort als störende Streustrahlung das Meßergebnis verfälschen kann. Durch die beschriebene 5-fache Reflexion des Ultraschallstrahlenbündels ist zum einen erreicht, daß der Neigungswinkel der unterhalb der Ultraschallwandler 18, 19 angeordneten Reflexionsflächen 26, 27 so gering gehalten werden kann, daß hinter diesen nur eine un wesentliche Verwirbelung des Mediums und damit eine entsprechend geringe Neigung zur Entstehung von Schmutzecken besteht. Außerdem ist die Wegstrecke des Ultraschallstrahlenbündels durch das Medium hindurch länger als etwa bei einer 3-fachen Reflexion, was zu einer Erhöhung der Genauigkeit der Messung beiträgt.

In Fig. 2 ist eine Ausführungsvariante der Meßrichtung nach Fig. 1 dargestellt, bei der anstelle der in der gleichen Richtung liegenden Eintritts- und Austrittsöffnung des Mediums diese Öffnungen an der gleichen Seite als sogenanntes Einrohr-Anschlußelement ausgebildet sind. Solche Einrohr-Anschlußelemente sind im Prinzip aus der Installationstechnik bekannt und bedürfen keiner näheren Erläuterung. Auch entspricht der Innenaufbau bezüglich der Anordnung der Ultraschallwandler 18, 19 und des Meßrohres 9 demjenigen in Fig. 1 und die gleichen Bauelemente sind daher mit den gleichen Bezugszeichen versehen. Das Mantelrohr 31 ist so ausgebildet, daß das Meßrohr auf die gleiche Weise, wie in Fig. 1 beschrieben, durch Befestigungsmittel 8, 10 herausnehmbar im Mantelrohr fixiert werden kann und die Austrittsöffnung des Mantelrohres 9 unmittelbar an der Austrittsöffnung der rohrseitigen Armatur flüssigkeitsdicht anliegt. Das Mantelrohr besitzt eine zur Austrittsöffnung des Meßrohres koaxiale Eintrittsöffnung, die sich mit Hilfe einer Überwurfmutter 32 an der nicht dargestellten Rohrarmatur befestigen läßt. Das flüssige Medium tritt in Richtung der Pfeile 2 in den Raum zwischen der Außenwand des Meßrohres 9 und der Innenwand des Mantelrohres 31 in die Meßeinrichtung ein, wird am geschlossenen Ende des Mantelrohres 31 nach innen umgelenkt, tritt durch das Meßrohr 9 hindurch und fließt an dessen austrittsseitigem Ende in die Armatur zurück. Die Ventilschraube 33 am Ende des Mantelrohres dient der Druckentlastung beim Lösen des Mantelrohres von der Armatur.

Die beiden in den Fig. 1 und 2 gezeigten Meßeinrichtungen unterscheiden sich lediglich durch die unterschiedlich ausgeführten Mantelrohre voneinander. Das Meßrohr 9 ist in beiden Fällen völlig identisch. Dies erlaubt eine rationelle Fertigung insbesondere der Präzisionsteile.

## Ansprüche

1. Durchflußmeßeinrichtung für flüssige Medien nach dem Ultraschall-Laufzeitprinzip, bestehend aus einem Mantelrohr, welches ein vom zu messenden, flüssigen Medium durchströmtes Meßrohr umschließt, welches an dessen Innenwand lösbar befestigt ist und das Mantelrohr in Strömungsrichtung versetzt angeordnete Durchbrüche für die Aufnahme von als kombinierte Sende-Empfangs-Wandler arbeitende Ultraschallwandler besitzt und das Meßrohr Ausnehmungen für den Durchtritt der von den Ultraschallwandlern erzeugten Ultraschallstrahlenbündeln aufweist, **dadurch gekennzeichnet** daß an sich bekannte, metallgekapselte, das Ultraschallstrahlenbündel in Richtung ihrer Symmetrieachse und senkrecht zur Flußrichtung (2) des Mediums sendende und empfangende metallgekapselte Ultraschallwandler (18, 19) benutzt sind, die in den Ausnehmungen des Mantelrohres (1, 31) flüssigkeitsdicht befestigt sind und die den Ultraschall-Eintrittsöffnungen (23, 24) des Meßrohres (9) gegenüberliegenden Reflektoren (26, 27) unter einem Winkel von 22,5° ihrer Reflexionsflächen gegen die Strömungsrichtung in entsprechend geneigte Wandteile des Meßrohres (9) einander zugeneigt eingelassen sind und in die Wandung des Meßrohres (9) zwischen den beiden geneigten Reflektoren (26, 27) jeweils gegenüberliegende weitere Reflektoren (28, 29, 30) innenwandbündig eingelassen sind, deren Reflexionsflächen parallel zur Strömungsrichtung liegen und deren Abstand unter Berücksichtigung des Brechungsgesetzes so gewählt ist, daß das Strahlenbündel des jeweils aussendenden Ultraschallwandlers nach wenigstens 4-fachem Durchtritt durch das Medium an den empfangenden Ultraschallwandler gelangt.

2. Durchflußmeßeinrichtung nach Anspruch 1, **dadurch gekennzeichnet**, daß der Abstand (a) zwischen den beiden Ultraschallstrahlenwandlern (18, 19) so gewählt ist, daß das vom jeweils aussendenden Ultraschallwandler erzeugte Ultraschallstrahlenbündel nach 6-fachem Durchtritt durch das Medium an den empfangenden Ultraschallstrahlenwandler gelangt.

3. Durchflußmeßeinrichtung nach Anspruch 1 oder 2, **dadurch gekennzeichnet**, daß als Meßrohr (9) ein Kunststoffrohr verwendet ist, in dessen Innenwand die Reflektoren (26, 27, 28, 29, 30) als metallische Plättchen eingelassen sind.

4. Durchflußmeßeinrichtung nach Anspruch 1, 2 oder 3, **da durch gekennzeichnet**, daß das Mantelrohr (1) an seinen in Durchflußrichtung des Mediums gegenüberliegenden Enden mit jeweils einer Wasserzähler-Normverschraubung (3, 6) versehen ist.

5. Durchflußmeßeinrichtung nach Anspruch 1, 2 oder 3, **da durch gekennzeichnet**, daß das Mantelrohr (31) als Einrohr-Anschlußstück mit einseitig angeordneten Ein-und Austrittsöffnungen für das Medium ausgebildet ist.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-A-3 544 456 (SIEMENS AG) * Insgesamt * | 1,2,4,5 | G 01 F 1/66 |
| D,Y | EP-A-0 303 255 (SIEMENS AG) * Insgesamt * | 1,2,4,5 | |
| A | FR-A-2 568 013 (WESTINGHOUSE ELECTRIC CORP.) * Seite 13, Zeile 34 - Seite 14, Zeile 16; Figuren 4-12 * | 1-3 | |
| | | | **RECHERCHIERTE SACHGEBIETE (Int. Cl.5)** |
| | | | G 01 F |

Der vorliegende Recherchenbericht wurde für alle Patentansprüche erstellt

| Recherchenort | Abschlußdatum der Recherche | Prüfer |
|---|---|---|
| DEN HAAG | 23-07-1990 | ROSE A.R.P. |